Europäisches Patentamt

European Patent Office

Office européen des brevets

(11) Veröffentlichungsnummer: **0 291 794 B1**

(12) **EUROPÄISCHE PATENTSCHRIFT**

(45) Veröffentlichungstag der Patentschrift: **26.02.92**

(21) Anmeldenummer: **88107377.9**

(22) Anmeldetag: **07.05.88**

(51) Int. Cl.⁵: **B60G 3/18**, B60G 15/00

(54) **Unabhängige Radaufhängung für lenkbare Räder von Kraftfahrzeugen.**

(30) Priorität: **19.05.87 DE 3716706**

(43) Veröffentlichungstag der Anmeldung:
**23.11.88 Patentblatt 88/47**

(45) Bekanntmachung des Hinweises auf die
Patenterteilung:
**26.02.92 Patentblatt 92/09**

(84) Benannte Vertragsstaaten:
**ES FR GB IT SE**

(56) Entgegenhaltungen:
**EP-A- 0 289 889**
**DE-A- 1 938 850**
**FR-A- 2 436 029**
**GB-A- 2 089 743**
**GB-A- 2 106 460**

(73) Patentinhaber: **Daimler-Benz Aktiengesellschaft**
**Postfach 600202 Mercedesstrasse 136**
**W-7000 Stuttgart 60(DE)**

(72) Erfinder: **Hespelt, Achim**
**Flohbergstrasse 17**
**W-7000 Stuttgart 60(DE)**

**Beschreibung**

Die Erfindung betrifft eine unabhängige Radaufhängung für lenkbare Räder von Kraftfahrzeugen mit den Merkmalen des Oberbegriffes des Anspruches 1.

Eine Radaufhängung der vorgenannten Art ist aus der nicht vorveröffentlichten EP-A 0 289 889 bekannt (Stand der Technik gemäß Artikel 54(3) EPC.). Bei dieser bekannten Radaufhängung ist die Schraubenfeder auf einem der zusammen ein Radführungsglied bildenden Einzellenker derart abgestützt, daß an diesem eine Querkraftkomponente auftritt und es ist die Lenkergeometrie derart ausgelegt, daß die dieser Querkraftkomponente im Anlenkpunkt des Einzellenkers am Radträger entsprechende Kraft multipliziert mit dem Hebelarm zwischen dem Anlenkpunkt des Einzellenkers am Radträger und der durch die Verlängerung der Einzellenker gebildeten ideellen Lenkachse bei einem kurveninneren Lenkeinschlag einen geringeren Wert annimmt als bei einem kurvenäußeren Lenkeinschlag.

Diese Gestaltung der Radaufhängung soll dazu dienen, ohne konstruktiven Mehraufwand und ohne Beeinträchtigung anderer achskinematischer Parameter eine zuverlässige Lenkungsrückstellung sicherzustellen, und, bei angetriebenen Rädern, zugleich den Freigang der Gelenkwellen zu gewährleisten.

Demgegenüber befaßt sich die Erfindung mit einem völlig anderen Problem, nämlich der Verringerung der radlastabhängigen Verspannung der Lenkung und des Einflusses dynamischer Radlastschwankungen auf die Lenkung.

Diesbezüglich liegt der Erfindung die Aufgabe zugrunde, eine Radaufhängung der eingangs genannten Art dahingehend zu verbessern, daß sich dynamisch ändernde Radaufstandskräfte für den Fahrer nicht mehr so unangenehm bemerkbar machen und daß die aus dem um die Lenkachse wirksamen, radlastabhängigen Moment resultierende Vorspannung des Lenkgestänges vermindert wird.

Diese Aufgabe wird durch die kennzeichnenden Merkmale des Anspruches 1 gelöst, da durch die erfindungsgemäße Anordnung dem radlastabhängigen Moment um die Lenkachse ein diesem entgegenwirkendes Moment überlagert wird.

Als besonders günstig im Hinblick auf die Nutzung des Bauraumes wie auch die angestrebte Wirkung erweist es sich, die Radaufhängung gemäß dem Anspruch 2 auszugestalten, wobei die Anordnung gemäß Anspruch 3 mit Wirkung des Stützgliedes auf den hinteren Einzellenker des unteren Radführungsgliedes besonders vorteilhaft ist.

In der Zeichnung ist ein Ausführungsbeispiel der Erfindung schematisiert dargestellt. Es zeigen:

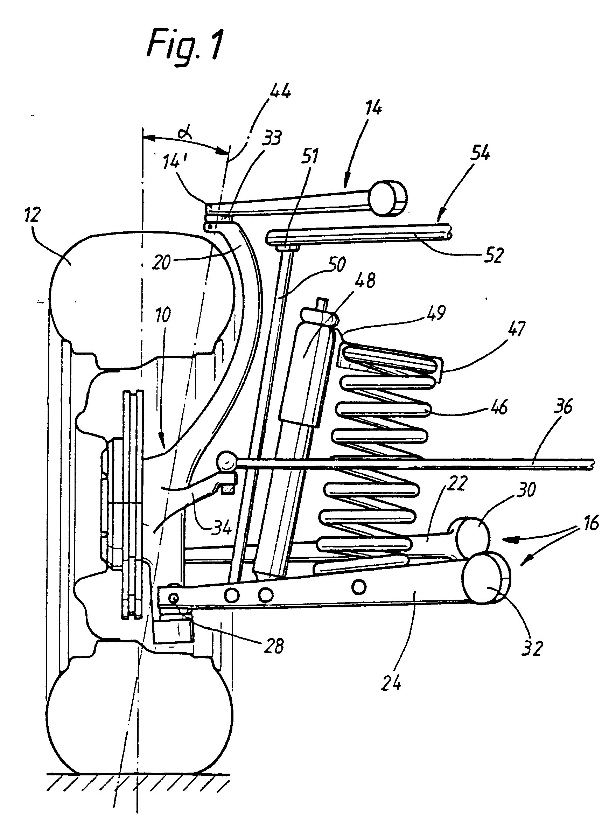

Figur 1    eine Ansicht der Radaufhängung für ein lenkbares Vorderrad, von hinten betrachtet und

Figur 2    eine Draufsicht der Radaufhängung, ohne obere Radführungsglieder.

Bei der gezeigten Radaufhängung bezeichnet 10 einen ein lenkbares Vorderrad 12 lagernden Radträger, der jeweils mittels eines oberen und eines unteren, als Ganzes mit 14 und 16 bezeichneten Radführungsgliedes am Fahrzeugaufbau 18 verschwenkbar gelagert ist.

Das obere Radführungsglied 14 bildet einen beispielsweise als Dreieckslenker ausgebildeten Querlenker, der mit seinem in Richtung Vorderrad 12 spitz zulaufenden Lenkerende 14' an einem seitlich am Vorderrad 12 hochragenden Hals 20 des Radträgers 10 angelenkt ist.

Das untere, sich in Fahrtrichtung F quer erstreckende Radführungsglied 16 ist in zwei, in Richtung auf den Radträger 10 bei dessen Geradeausstellung aufeinander zulaufende Einzellenker 22 und 24 aufgeteilt, die am Radträger 10 bei 26 bzw. 28 gelenkig und bei 30 und 32 am Fahrzeugaufbau 18 schwenkbeweglich gelagert sind. Zur Durchführung von Lenkbewegungen ist der Radträger 10 mit einem Lenkspurhebel 34 ausgestattet, an welchem eine Spurstange 36 einer Lenkeinrichtung des Fahrzeuges angelenkt ist.

Die aufbauseitigen Gelenke 30, 32 und die radträgerseitigen Gelenke 26, 28 der Einzellenker 22 und 24 ermöglichen es diesen, in Verbindung mit dem oberen Radführungsglied 14 bei Einfederungs- und Lenkbewegungen des Rades 10 kardanische Bewegungen auszuführen.

Beim vorliegenden Ausführungsbeispiel befinden sich beide Einzellenker 22 und 24 in einer gemeinsamen Ebene. Die Lenkgergelenke 26 und 30 sowie 28 und 32 liegen auf jeweils einer Geraden 38 bzw. 40, die sich bei 42 schneiden. Dieser Schnittpunkt 42 definiert ein unteres, ideelles Führungsgelenk (Pol) des Radträgers 10.

Eine den oberen Gelenkpunkt 33 des Radträgers 10 und den Schnittpunkt 42 durchdringende Gerade definiert eine einen Spreizwinkel $\alpha$ aufweisende und beispielsweise einen negativen Lenkrollhalbmesser erzeugende ideelle Lenkachse 44 des Vorderrades 12, die beispielsweise in Fahrtrichtung F nach vorne unten entsprechend schräg eingepaßt ist, um einen positiven Radnachlauf sicherzustellen. Die Einzellenker 22 und 24 können einander ebensogut windschief zugeordnet sein, wobei in diesem Falle der Schnittpunkt 42 der Geraden 38, 40 zeichnerisch jedoch nicht darstellbar ist.

Mit 46 ist eine Schraubenfeder, mit 48 ein Stoßdämpfer und mit 50 eine Stütze eines Schenkels 52 eines U-förmigen Drehstab-Stabilisators 54 bezeichnet. Diese Teile bilden jeweils für sich ein Stützglied, die auf dem, in Fahrtrichtung F gesehen, hinteren Einzellenker 24 abgestützt sind. Stoßdämpfer 48 und Stütze 50 sind dabei auf dem Einzellenker 24 beweglich abgestützt. Die Abstützung der Teile 46, 48, 50 könnte auch am anderen Einzellenker 22 vorgesehen sein, jedoch bietet die gezeigte hintere Abstützung, insbesondere hinsichtlich des zur Verfügung stehenden Einbauraumes, günstigere Einbaumöglichkeiten.

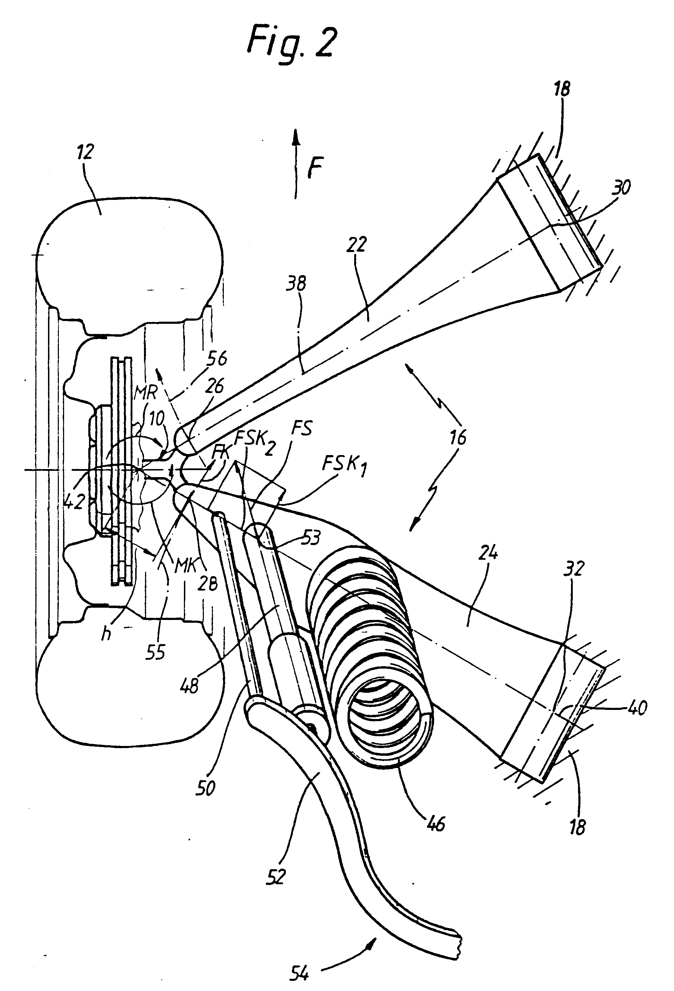

Die Anordnung der oberen, aufbauseitigen Abstützungen 47 und 49 von Schraubenfeder 46 und Stoßdämpfer 48 sowie des Anlenkpunktes 51 der Stütze 50 des Drehstabschenkels 52 ist im Raum so gewählt, daß sie in der Draufsicht, gemäß Figur 2, bezogen auf die Fahrtrichtung F, beispielsweise wesentlich hinter der Geraden 40 des hinteren Einzellenkers 24 liegen. Die Teile 46, 48 und 50 erstrecken sich hierbei in Richtung auf diesenEinzellenker 24 schräg nach vorne außen.

Aus dieser Einspannung der Teile 46, 48, 50 werden die bei sich dynamisch ändernden Radaufstandskräften am Einzellenker 24 wirksam werdenden Stützkräfte FS an den Abstützpunkten 53, wie in Figur 2 lediglich für den Stoßdämpfer 48 veranschaulicht, in die beiden Kraftkomponenten $FSK_1$ und $FSK_2$ zerlegt, wobei die Wirkung der aus der Schräganstellung dieser Teile 46, 48, 50 resultierenden Kraftkomponente $FSK_1$ weiter unten noch erläutert wird.

Bei dynamischen Radlastschwankungen, die beispielsweise durch Unebenheiten der Fahrbahn entstehen können, bewirkt die schräge Einpassung der Lenkachse 44 in die Radaufhängung um die Lenkachse ein Moment in Richtung des Pfeiles MR. Dieses wirkt letztlich über den Lenkspurhebel 34 und die Spurstange 36 auf das Lenkrad und muß vom Fahrer abgestützt werden.

Die erläuterte Anordnung von Schraubenfeder 46, Stoßdämpfer 48 und Stütze 50 zwischen Einzellenker 24 und Fahrzeugaufbau 18 beseitigt diesen Nachteil. Bei sich dynamisch ändernden Radaufstandskräften bewirkt die am Einzellenker 24 gemäß Figur 2 in der Zeichenebene senkrecht zur Geraden 40 wirksame und auf den Einzellenker 22 zugerichtete Kraftkomponente $FSK_1$ ein Verschwenken des Einzellenkers 24 in der Zeichenebene um dessen aufbauseitigen Gelenkpunkt 32, wobei sich der radträgerseitige Gelenkpunkt 28 entlang der Bahnkurve 55 und der radträgerseitige Gelenkpunkt 26 des Einzellenkers 22 entlang der Bahnkurve 56 verlagern.

Aus der am Gelenkpunkt 28 wirksamen Schwenkkraft FK und dem einen Hebel- bzw. Momentenarm bildenden Abstand h des Gelenkpunktes 28 von dem auf der Lenkachse 44 liegenden Schnittpunkt 42 wird dabei am Radträger 10 zum Moment MR ein Gegenmoment MK erzeugt.

Durch entsprechende Wahl der Neigung der durch Schraubenfeder 46, Stoßdämpfer 48 und Stütze 50 gebildeten Stützglieder kann Gleichheit der beiden Momente MR - MK erzielt werden, so daß für eine Federungs- und Lenkstellung (z.B. Konstruktionslage - Geradeausstellung des Radträgers 10) das Moment MR voll kompensiert wird.

Eine Abwandlung der beschriebenen Radaufhängung kann auch darin bestehen, das obere Radführungsglied 14, analog zum unteren Radführungsglied 16, in Form zweier Einzellenker vorzusehen. In diesem Falle könnten sich Schraubenfeder 46 und Stoßdämpfer 48 auch an einem Einzellenker des oberen Radführungsgliedes 54 abstützen, während sich auf einem der Einzellenker 22, 24 des unteren Radführungsgliedes 16 der Stoßdämpfer 48 abstützen könnte. Im Falle einer Federbeinachse könnte als Stützglied lediglich die Stütze 50 des Drehstab-Stabilisators 54 vorgesehen sein, deren Abstützung an einem der beiden Einzellenker 22 oder 24 erfolgen könnte. Im Falle eines Dämpferbeines könnten als Stützglieder die Stütze 50 und die Schraubenfeder 46 eingesetzt werden, während bei einer Radaufhängung mit oberem Querlenker die Schraubenfeder 46 auch auf dem oberen Querlenker und der Stoßdämpfer 48 und die Stütze 50 auf einem der beiden unteren Einzellenker 22 bzw. 24 in der erläuterten Schräganstellung abgestützt werden könnten.

Die Erfindung bietet schließlich bei gleichzeitigem Einsatz mehrerer Stützglieder folgende Vorteile:
Wenigstens eines der Stützglieder, z.B. die Schraubenfeder 46, kann durch entsprechende Schräganstellung dazu genutzt werden, das um die Lenkachse 44 auftretende Moment MR zwecks Verstärung der Vorspannung des Lenkgestänges entsprechend zu vergrößern.

Die Schräganstellung des anderen bzw. der übrigen, am gleichen oder am anderen Querlenker angreifenden Stützglieder kann hingegen so gewählt sein, daß ein aus dynamischen Radlastschwankungen resultierendes Moment nicht mehr am Lenkrad abzustützen ist.

**Patentansprüche**

1. Unabhängige Radaufhängung für lenkbare Räder von Kraftfahrzeugen mit einem Radträger (10) und einem Radführungsglied (16), das durch zwei an Fahrzeugaufbau (18) und Radträger (10) gelenkig angelenkte Einzellenker (22;24) gebildet ist, die in Geradeausstellung des Radträgers (10) in Richtung auf diesen gepfeilt verlaufen und zusammen mit einem weiteren Radführungsglied (14) für den Radträger (10) eine ideelle, momentane Lenkachse (44) definieren, die schräg zur Radaufstandsebene angestellt ist und diese außerhalb des Radaufstandspunktes durchstößt, derart, daß sich ein in seiner Größe von der Radaufstandskraft abhängiges Moment (MR) in die Lenkachse (44) ergibt, wobei zwischen einem der beiden Einzellenker (22;24) und dem Fahrzeugaufbau (18) mindestens ein schräg angestelltes, in Wirkrichtung elastisches Stützglied (46;48;50) angeordnet ist und die vom Stützglied (46;48;50) auf den Einzellenker (22) übertragene Stützkraft (FS) derart gerichtet ist, daß eine quer zur Lenkerlängsrichtung verlaufende Stützkraftkomponente (FSK) ein dem um die Lenkachse (44) auftretenden Moment (MR) entgegenwirkendes, weiteres Moment (MK) ergibt,
**dadurch gekennzeichnet,**
daß für eine Federungs- und Lenk-Stellung (z.B. Konstruktionslage - Geradeausstellung der Radträger 10) durch entsprechende Wahl der Neigung des elastischen Stützgliedes (46;48;50) das von der Radaufstandskraft abhängige Moment (MR) durch das entgegenwirkende Moment (MK) kompensiert wird.

2. Radaufhängung nach Anspruch 1,
**dadurch gekennzeichnet,**
daß das durch Schraubenfeder (46), Stoßdämpfer (48) und/oder Stütze (50) eines Drehstabstabilisators (54) gebildete Stützglied auf dem bezogen auf die Fahrtrichtung (F) hinten liegenden Einzellenker (24) abgestützt ist.

3. Radaufhängung nach Anspruch 1 oder 2,
**dadurch gekennzeichnet,**
daß von den am Radträger (10) angelenkten Radführungsgliedern zumindest das untere Radführungsglied (16) in zwei Einzellenker (22;24) aufgeteilt ist.

## Claims

1. An independent wheel suspension for steerable wheels of motor vehicles with a wheel support (10) and a wheel guide member (16) which is constituted by two individual swinging arms (22; 24) swivellably articulated on the vehicle body (18) and the wheel support (10), which swinging arms, in the straight position of the wheel support (10) extend in the direction of the latter and, together with a further wheel guide member (14) for the wheel support (10), define an ideal temporary steering axis (44) which is disposed slantwise to the wheel contact surface and passes through the latter outside the point of contact of the wheel, in such a manner that a torque (MR) dependent as regards its value upon the wheel contact force arises into the steering axis (44), there being disposed between one of the two individual swinging arms (22; 24) and the vehicle body (18) at least one slantingly-arranged support member (46; 48; 50) resilient in the operational direction, and the supporting force (FS) transmitted from the support member (46; 48; 50) being so directed that a supporting force component (FSK) extending transversally to the longitudinal direction of the swivelling arm produces a further torque (MK) counteracting the torque (MR) arising around the steering axis (44), characterized in that, for a springing and steering position (e.g. construction position - straight position of the wheel supports (10)) the torque (MR) dependent upon the wheel contact force is compensated by the counteracting torque (MK) by a corresponding selection of the slant of the resilient support member (46; 48; 50).

2. A wheel suspension according to claim 1, characterized in that the support member constituted by helical spring (46), shock-arbsorber (48) and/or support (50) of a rotation stabilizer (54) is supported on the individual swinging arm (24) situated rearwards in relation to the direction of travel (F).

3. A wheel suspension according to either claim 1 or 2, characterized in that, of the wheel guide members articulated on the wheel support (10) at least the lower wheel guide member (16) is divided into two individual swinging arms (22; 24).

## Revendications

1. Suspension indépendante pour roues directrices de véhicules automobiles, comportant un support de roue (10) et un organe de guidage de roue (16), qui est constitué par deux bras oscillants individuels (22 ; 24 ) montés de façon articulée sur le châssis (18) du véhicule et le support de roue (10) et qui, dans la disposition droite du support de roue (10), sont orientés vers celui-ci en formant une flèche et définissent, en coopération avec un autre organe (14) de guidage de roue, un axe de direction instantané idéal (44) pour le support de roue (10), cet axe (44) étant disposé en oblique par rapport au plan d'appui de roue et coupant celui-ci en dehors du point d'appui de roue de telle manière qu'un moment (MR), dont la grandeur est fonction de la force d'appui de roue, soit produit selon l'axe de direction (44), et il est prévu entre un des deux bras oscillants individuels (22 ; 24) et le châssis (18) du véhicule au moins un organe de soutien (46 : 48 : 50 ), disposé en oblique élastique dans la direction d'action et la force de soutien (FS), transmise par l'organe de soutien (46; 48 ; 50 ) au bras oscillant individuel (22) est orientée de telle sorte qu'une composante (FSK) de cette force de soutien, orientée perpendiculairement à la direction longitudinale du bras oscillant, produise un autre moment (MK), agissant en sens opposé au moment (MR) s'exerçant autour de l'axe de direction (44), caractérisée en ce que, pour une position de suspension et de direction ( par exemple disposition de construction - orientation droite du support de roue 10 ), le moment (MR) fonction de la force d'appui de roue est compensé par le moment (MK) agissant en sens opposé, par un choix correspondant de l'inclinaison de l'organe élastique de soutien (46 : 48 ; 50).

2. Suspension de roue selon la revendication 1, caractérisée en ce que l'organe de soutien, constitué par un ressort hélicoïdal (46), un amortisseur (48) et/ou un appui (50) d'un stabilisateur (54) de barre de torsion, s'appuie sur le bras oscillant individuel (24) situé en arrière, en considérant le sens de marche (F).

3. Suspension de roue selon la revendication 1 ou 2, caractérisée en ce que, en ce qui concerne les organes de guidage de roues articulés sur le support de roue (10), au moins l'organe inférieur de guidage de roue (16) est divisé en deux bras oscillants individuels (22 ; 24).

## Fig.1

# Fig. 2